(19) Europäisches Patentamt
European Patent Office
Office européen des brevets

(11) Veröffentlichungsnummer: **0 225 518**
**B1**

(12) # EUROPÄISCHE PATENTSCHRIFT

(45) Veröffentlichungstag der Patentschrift: **18.04.90**

(21) Anmeldenummer: **86116069.5**

(22) Anmeldetag: **20.11.86**

(51) Int. Cl.⁴: **C08L 83/10,** C08L 35/06 // (C08L83/10, 35:06),(C08L35/06, 83:10)

(54) **Thermoplastische Polycarbonatformmassen.**

(30) Priorität: **06.12.85 DE 3543119**

(43) Veröffentlichungstag der Anmeldung: **16.06.87 Patentblatt 87/25**

(45) Bekanntmachung des Hinweises auf die Patenterteilung: **18.04.90 Patentblatt 90/16**

(84) Benannte Vertragsstaaten: **DE ES FR GB IT NL**

(56) Entgegenhaltungen:
**EP-A- 0 135 794**
**FR-A- 2 204 649**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Kress, Hans-Jürgen, Dr., Scheiblerstrasse 111, D-4150 Krefeld(DE)**
Erfinder: **Paul, Winfried, Dr., Bethelstrasse 22, D-4150 Krefeld(DE)**
Erfinder: **Peters, Horst, Dr., Winterberg 25, D-5090 Leverkusen 3(DE)**
Erfinder: **Lindner, Christian, Dr., Riehler Strasse 200, D-5000 Köln 60(DE)**
Erfinder: **Buekers, Josef, Kneinstrasse 58a, D-4150 Krefeld(DE)**

**EP 0 225 518 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind thermoplastische Formmassen, bestehend aus

A. 40 - 95 Gew.-Teilen bezogen auf Gewichtssumme A. + B., Polydiorganosiloxan-Polycarbonat-Blockcopolymer auf Basis der Diphenole der Formeln (I) und (Ia), mit mittlerem Molekulargewicht $\overline{M}_w$ von 10.000 bis 200.000 und mit einem Gehalt an aromatischen Carbonatstruktureinheiten zwischen 75 Gew.-% und 99 Gew.-%, vorzugsweise 85 Gew.-% und 98 Gew.-%, und einem Gehalt an Diorganosiloxy-Einheiten zwischen 1 Gew.-% und 25 Gew.-%, vorzugsweise 2 Gew.-% und 15 Gew.-%, wobei die Blockcopolymeren, ausgehend von den α, ω-Bishydroxyaryloxyendgruppen-haltigen Polydiorganosiloxanen (Ia), mit einem Polymerisationsgrad $P_n$ von 5 bis 100, vorzugsweise 20 bis 80, hergestellt werden, und

B. 5 - 60 Gew.-Teilen bezogen auf Gewichtssumme A. + B., eines statistisch aufgebauten Copolymerisats aus 95 - 70 Gew.-%, vorzugsweise 90 - 75 Gew.-%, Styrol, α-Methylstyrol oder kernsubstituierten Styrolen oder Mischungen der genannten Vinylaromaten und 5 - 30 Gew.-%, vorzugsweise 10 - 25 Gew.-%, Maleinsäureanhydrid,

sowie gegebenenfalls wirksamen Mengen an Stabilisatoren, Pigmenten, Fließmitteln, Flammschutzmitteln, Entformungsmitteln und/oder Antistatika.

Die Komponente A. kann auch eine Mischung aus Polydiorganosiloxan-Polycarbonat-Blockcopolymeren mit siloxanfreien, thermoplastischen Polycarbonaten sein, wobei der Gesamtgehalt an Diorganosiloxy-Einheiten in dieser Polycarbonatmischung wiederum zwischen 1 Gew.-% und 25 Gew.-%, vorzugsweise zwischen 2 Gew.-% und 15 Gew.-% liegt.

Legierungen aus 5 - 95 Gew.-% aromatischer Polycarbonate und 95 - 5 Gew.-% Styrol-Maleinsäureanhydrid-Copolymeren mit 5 - 30 Gew.-% einpolymerisiertem Maleinsäureanhydrid sind thermoplastische Formmassen, die die Polycarbonate, denen sie in den meisten technologischen Eigenschaften ähneln, vor allem hinsichtlich Beständigkeit gegenüber heißem Wasser sowie hinsichtlich Fließfähigkeit der Schmelzen bei thermoplastischer Verarbeitung deutlich übertreffen (DE-A 2 252 974).

Ein wesentlicher Nachteil der Legierungen aus aromatischen Polycarbonaten und Styrol-Maleinsäureanhydrid-Copolymeren ist jedoch, daß sie für manche Anwendungen, zum Beispiel im Kfz-Innenbereich oder im Haushaltssektor eine ungenügende Zähigkeit, insbesondere Kerbschlagzähigkeit, besitzen.

Dieser Nachteil kann entweder durch Einarbeitung von Pfropfkautschuksystemen und/oder Polymer in die Mischung aus aromatischen Polycarbonaten und Styrol-Maleinsäureanhydrid-Copolymeren (siehe beispielsweise US-A 4 218 544, 4 393 169, JP-A 54 050 553 und 55 161 846) beziehungsweise durch Verwendung von schlagfest modifiziertem Styrol-Maleinsäureanhydrid-Copolymer (siehe beispielsweise DE-A 3 130 774, 3 206 184, EP-A 63 634, US-A 3 966 842 und 4 351 920) behoben werden. Man handelt sich hierbei jedoch wieder andere Nachteile ein, beispielsweise schlechtere Verarbeitbarkeit beziehungsweise auf den Kautschuk zurückzuführende geringere Temperaturbelastbarkeit.

Aus der EP-A 0 135 794 sind Abmischungen von Polydiorganosiloxan-Polycarbonat-Blockcopolymeren mit Pfropfpolymerisaten und mit kautschukfreien, thermoplastischen Vinylpolymerisaten bekannt. Als Vinylpolymerisate sind auch Copolymerisate von Styrol mit Maleinsäureanhydrid möglich (Seite 10 der EP-A). Derartige Formmassen besitzen jedoch, wie oben erwähnt, insbesondere bei großen Mengen auf den Kautschuk-Anteil zurückzuführende Nachteile, wie eine geringe Temperaturbelastbarkeit bzw. mit der Zeit nachlassende Duktilität, die durch eine Kautschukalterung hervorgerufen wird, wobei es auch zu deutlichen Vergilbungen oder Verbräunungen kommen kann. Es hat sich nun gezeigt, daß auch schon durch ausschließliche Verwendung von Polydiorganosiloxan-Polycarbonat-Blockcopolymeren und Styrol-Maleinsäureanhydrid-Copolymeren ohne Kautschuk bzw. Pfropfpolymerisat Produkte mit sehr hoher Kerbschlagzähigkeit erreicht werden können. Sie zeichnen sich in der erfindungsgemäßen Zusammensetzung durch eine hohe Wärmeformbeständigkeit und gute Verarbeitbarkeit aus.

Die erfindungsgemäß einzusetzenden Polydiorganosiloxan-Polycarbonat-Blockcopolymeren sind entweder literaturbekannt (siehe beispielsweise US-A 3 189 662, US-A 3 419 634, DE-A 3 334 782 bzw. EP-A 122 535 und EP-A 135 794 oder, sofern hergestellt unter Mitverwendung von speziellen Kettanabbrechern, in der DE-A 3 506 472 = EP-A 193 757 beschrieben.

Von den literaturbekannten Polydiorganosiloxan-Polycarbonat-Blockcopolymeren werden in der einschlägigen Literatur ihre verbesserten mechanischen Eigenschaften bei tiefen Temperaturen beschrieben (z. B. B.M. Beach, R.P. Kambour und A.R. Schultz, J. Polym, Sci., Polym. Lett. Ed. 12, 247 (1974)).

Die erfindungsgemäß einzusetzenden Blockcopolymeren gemäß Komponente A. sind solche auf Basis der Diphenole der Formel (I)

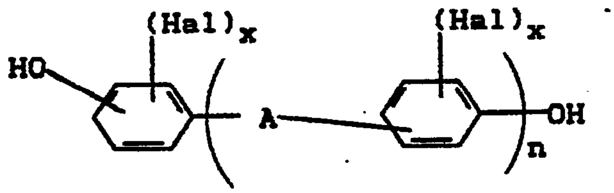

(I),

worin "A" eine Einfachbindung, ein $C_1$-$C_5$-Alkylen, ein $C_2$-$C_5$-Alkyliden, ein $C_5$-$C_6$-Cycloalkyliden, -S- oder -$SO_2$-, "Hal" Chlor oder Brom, "x" 0, 1 oder 2 und "n" 1 oder null sind und der Formel (Ia)

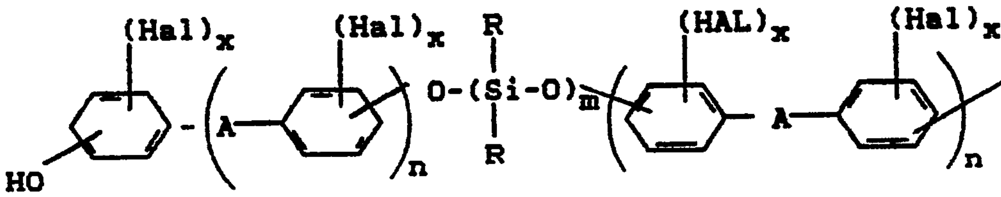

(Ia)

worin "A", "Hal", "x" und "n" die für Formel (I) genannte Bedeutung haben, und die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und "m" eine ganze Zahl zwischen 5 und 100, vorzugsweise zwischen 20 und 80, ist und wobei der Gewichtsanteil an Diphenolen der Formel (Ia) in den Copolycarbonaten jeweils so bemessen ist, daß der Gehalt an Diorganosiloxy-Einheiten

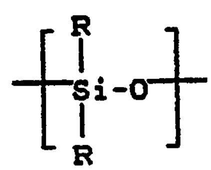

im Copolycarbonat zwischen 1 Gew.-% und 25.-%, vorzugsweise zwischen 2 Gew.-% und 15 Gew.-%, beträgt.

Die Diphenole der Formel (I) sind entweder literaturbekannt oder nach literaturbekannten Verfahren herstellbar; Polydiorganosiloxane mit Hydroxy-aryloxy-Endgruppen gemäß Formel (Ia) sind ebenfalls bekannt (s. beispielsweise US-A 3 419 634) bzw. nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (s. beispielsweise DE-A 3 334 782).

Geeignete Kettenabbrecher sind beispielsweise Phenol, p-Chlorphenol, p-tert.-Butylphenol und 2,4,6-Tribromphenol.

Darüber hinaus ist in der DE-A 3 506 472 die Herstellung von Blockcopolymeren mit Monoalkylphenolen oder Dialkylphenolen mit insgesamt 8 bis 20 C-Atomen in den Alkylsubstituenten beschrieben, wobei beispielsweise als Kettenabbrecher p-Isooctylphenol, p-Nonylphenol, 3,5-Di-tert.-butyl-phenol, p-tert.-Octyl-phenol, p-Dodecyl-phenol, 2-(3,5-Dimethylheptyl)-phenol und 4-(3,5-Dimethyl-heptyl)-phenol genannt sind.

Die Menge an einzusetzenden Kettenabbrechern beträgt im allgemeinen zwischen 0,5 Mol-% und 10,0 Mol-%, bezogen auf die Summe der jeweils eingesetzten Diphenole (I) und (Ia).

Die erfindungsgemäß geeigneten Polycarbonate gemäß Komponente A haben mittlere Gewichtsmittelmolekulargewichte ($\overline{M}_w$, gemessen beispielsweise durch Ultrazentrifugation oder Streulichtmessung) von 10.000 bis 200.000, vorzugsweise von 20.000 bis 80.000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (Ia) sind solche, in denen R Methyl, Ethyl, Propyl, n-Butyl, tert.-Butyl und Phenyl ist.

Bevorzugte Diphenole der Formel (Ia) sind die der Formel (Ib)

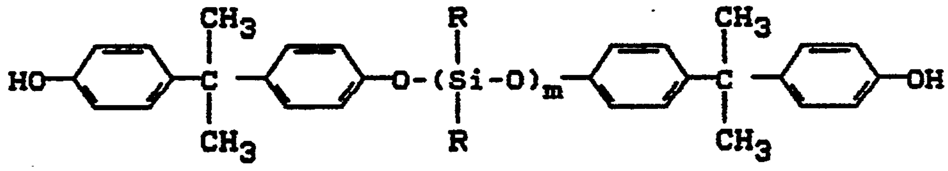

(Ib)

worin die R's gleich sind und die vorstehend genannte Bedeutung haben, also Methyl etc. und Phenyl bedeuten und "m" wiederum eine ganze Zahl zwischen 5 und 100, vorzugsweise zwischen 20 und 80, ist.

Die Herstellung der Diphenole der Formel (Ia) kann beispielsweise aus den entsprechenden Bis-chlorverbindungen (II)

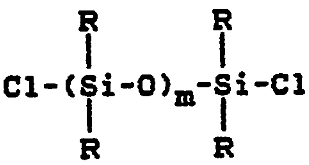

(II)

und den Diphenolen (I) beispielsweise gemäß US-A 3 419 634, Spalte 3, in Kombination mit US-A 3 182 662 erfolgen.

In den Bis-chlorverbindungen (II) haben R und "m" die Bedeutung wie in den Diphenolen (Ia) bzw. (Ib).

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Die erfindungsgemäß geeigneten Styrol-Maleinsäureanhydrid-Copolymeren gemäß Komponente B. sind statistisch aufgebaut. Solche statistisch aufgebauten Copolymerisate können bevorzugt durch eine kontinuierliche Masse- oder Lösungspolymerisation bei unvollständigen Umsätzen aus den entsprechenden Monomeren hergestellt werden.

Anstelle von Styrol können die Polymeren auch kernsubstituierte Styrole wie p-Methylstyrol, Vinyltoluol, 2,4-Dimethylstyrol und/oder andere substituierte Styrole wie α-Methylstyrol enthalten.

Die Molekulargewichte der erfindungsgemäß geeigneten statistisch aufgebauten Styrol-Maleinsäureanhydrid-Copolymeren gemäß Komponente B. können über einen weiten Bereich variieren. Bevorzugt ist für diese Produkte eine Grenzviskositätszahl [η] von 0,3 - 0,9 (gemessen in Dimethylformamid bei 25°C; siehe hierzu Hoffmann, Krömer, Kuhn, Polymeranalytik I, Stuttgart 1977, Seite 316 ff.).

Die erfindungsgemäßen thermoplastischen Formmassen können weitere für Polycarbonate oder für Styrol-Maleinsäureanhydrid-Copolymere bekannte Zusätze, wie Stabilisatoren, Pigmente, Fließmittel, Flammschutzmittel, Entformungsmittel und/oder Antistatika enthalten.

Die erfindungsgemäßen Formmassen, bestehend aus den Komponenten A., B. und gegebenenfalls weiteren bekannten Zusätzen wie Stabilisatoren, Pigmenten, Fließmitteln, Flammschutzmitteln, Entformungsmittel und/oder Antistatika werden hergestellt, indem man die jeweiligen Bestandteile in bekannter Weise vermischt und bei Temperaturen von 220 bis 330°C in üblichen Aggregaten wie Innenknetern oder Ein-oder Zweischneckenextrudern schmelzcompoundiert oder schmelzextrudiert, oder indem man die Lösungen der jeweiligen Komponenten in geeigneten organischen Lösungsmitteln, beispielsweise in Chlorbenzol, mischt und die Lösungsgemische in üblichen Aggregaten, beispielsweise in Eindampfextrudern, eindampft.

Gegenstand der vorliegenden Erfindung ist somit auch ein Verfahren zur Herstellung von thermoplastischen Formmassen, bestehend aus den Komponenten A., B. und gegebenenfalls Stabilisatoren, Pigmenten, Fließmitteln, Flammschutzmitteln, Entformungsmitteln und/oder Antistatika, das dadurch gekennzeichnet ist, daß man die Komponenten A., B. sowie gegebenenfalls Stabilisatoren, Pigmente, Fließmittel, Flammschutzmittel, Entformungsmittel und/oder Antistatika nach erfolgter Vermischung bei Temperaturen von 220 bis 330°C in gebräuchlichen Aggregaten schmelzcompoundiert oder schmelzextrudiert, oder daß man die Lösungen dieser Komponenten in geeigneten organischen Lösungsmitteln nach erfolgter Vermischung in gebräuchlichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z. B. für Haushaltsgeräte wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

## Beispiele

Eingesetzte Legierungskomponenten

A.1 Ein Copolycarbonat auf Basis von Bisphenol A mit 5 Gew.-% Polydimethylsiloxan der Blocklänge ($\overline{P_n}$) 40, mit einer relativen Lösungsviskosität von 1,31, gemessen in $CH_2Cl_2$ bei 25°C und einer Konzentration von 0,5 Gew.-%, hergestellt unter Verwendung von Phenol als Kettenabbrecher gemäß DE-A 3 334 782.

A.2 Homopolycarbonat auf Basis von Bisphenol A mit einer relativen Lösungsviskosität von 1,32, gemessen in $CH_2Cl_2$ bei 25°C und einer Konzentration von 0,5 Gew.-%, hergestellt unter Verwendung von Phenol als Kettenabbrecher.

Herstellung der Copolymerharze B.

In einem ummantelten Gefäß, das mit Innenthermometer, Rührer, Ein- und Auslaß versehen ist, werden 750 Tl. eines Gemisches mit einer Zusammensetzung gemäß Tabelle 1 vorgelegt und auf 130°C erwärmt. Dann wird ein Monomerstrom von 110 Tl. derselben Zusammensetzung so zudosiert und gleichzeitig dieselbe Menge an Polymerlösung dem Gefäß entnommen, daß der Füllstand im Gefäß gehalten wird. Dem Monomerstrom werden kontinuierlich ca. 0,05 Tl./h tert.-Butylperpivalat (75% %ig in Dibutylphthalat) zugefügt. Nach ca. 2 h hat sich ein konstanter Umsatz von ca. 40 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit.

Die Compoundierung der Komponenten A. und B. erfolgte auf einem 3-1-Innenkneter bei Temperaturen zwischen 200 und 220°C bzw. auf einem Doppelwellenextruder (Werner und Pfleiderer) vom Typ ZSK 53 bei einer Temperatur von 240°C.

Die Herstellung der Formkörper erfolgte auf einer Spritzgießmaschine bei 260°C.

Die Bestimmung der Wärmeformbeständigkeit nach Vicat (Methode B) erfolgte gemäß DIN 53 460.

Tabelle 1 Zusammensetzung der Einsatzmonomeren und der Copolymerisate B

| | Einsatzmonomere (Gew.-%) | | Copolymerisat (Gew.-%) | | Grenzviskositätszahl |
|---|---|---|---|---|---|
| | Styrol | Maleinsäureanhydrid | Styrol | Maleinsäureanhydrid | des Copolymerisats |
| B 1 | 93,8 | 6,2 | 84,5 | 15,5 | 0,514 |
| B 2 | 93,2 | 6,8 | 83 | 17 | 0,518 |

Die Bestimmung der Kerbschlagzähigkeit nach Izod erfolgte an Stäben der Abmessung 2,5 × 1/2 × 1/8" (63,5 × 12,7 × 3,2 mm) gemäß ASTM-D-256 bzw. in Anlehnung an DIN 53 453/ISO R 179 an Stäben der Abmessung 50 × 6 × 4 mm, wobei für die Kerbschlagzähigkeit die Stäbe mit einer V-förmigen Kerbe der Kerbtiefe 2,7 mm versehen wurden.

Die Beurteilung der Fließfähigkeit erfolgte über den bei der Spritzgußmaschine (Massetemperatur: 260°C) notwendigen Fülldruck (s.: Johannaber, Kunststoffe 74 (1984), 1; S. 1 - 5) zur Herstellung von Stäben der Abmessung 2,5 × 1/2 × 1/8".

Aus der folgenden Tabelle können die genauen Zusammensetzungen der geprüften Formmassen sowie die erhaltenen Prüfdaten entnommen werden.

Wie die Tabelle zeigt, besitzen Polycarbonat/SMA-Blends gegenüber reinem Polycarbonat eine deutlich bessere Fließfähigkeit bei nur geringfügig verschlechterter Wärmeformbeständigkeit. Eine Gegenüberstellung der erfindungsgemäßen Versuche mit den Vergleichsansätzen zeigt, daß eine gute Kerbschlagzähigkeit nur mit einem Polydiorganosiloxan-Polycarbonat-Blockcopolymeren erreicht wird, wobei mit Blends, die 50 % dieses Produktes enthalten, noch Zähigkeiten erreicht werden, für die bei Verwendung von reinem Bisphenol-A-Polycarbonat Mengen von 80 % desselben im Blend notwendig sind.

Bei Gehalten von < 40 % Polycarbonat werden keine Unterschiede zwischen dem reinen Bisphenol-A-Polycarbonat und dem Polydiorganosiloxan-Polycarbonat-Blockcopolymeren mehr gefunden. In beiden Fällen wird nur ein unbefriedigendes Niveau erreicht.

Tabelle 2

| | | erfindungsgemäße Versuche | | | | | Vergleichsversuche | | | | | |
|---|---|---|---|---|---|---|---|---|---|---|---|---|
| A.1 | % | 50 | 90 | 80 | 80 | 100 | | | | | 35 | |
| A.2 | " | | | | | | 100 | 90 | 80 | 80 | | 35 |
| B.1 | " | 50 | | | | | | | | | 65 | 65 |
| B.2 | " | | 10 | 20 | 20 | | | 10 | 20 | 20 | | |
| Kerbschlagzähigkeit (DIN) | | | | | | | | | | | | |
| Raumtemp. | $kJ/m^2$ | 17,3 | | | 31 | | | | | 18 | 4,1 | 2,4 |
| - 40° C | " | 9,5 | | | 37 | | | | | | | |
| Kerbschlagzähigkeit (Izod) | | | | | | | | | | | | |
| Raumtemp. | J/m | | 786 | 752 | | 973 | 1006 | 285 | 255 | 241 | | |
| - 20° C | " | | 611 | 635 | | 836 | 374 | 184 | 132 | | | |
| - 40° C | " | | 362 | 586 | | 732 | | | | | | |
| Wärmeformbeständigkeit | | | | | | | | | | | | |
| (Vicat-B) | °C | 138 | 145 | 145 | 142 | 147 | 153 | 151 | 148 | 145 | 136 | 136 |
| Fülldruck (260° C) | bar | | 218 | 187 | | 287 | 339 | 237 | 155 | | | |
| Compoundierung | | 2 | 1 | 1 | 2 | 1 | 1 | 1 | 1 | 2 | 2 | 2 |
| (Kneter = 1; Extruder = 2) | | | | | | | | | | | | |

**Patentansprüche**

1. Thermoplastische Formmassen bestehend aus
A. 40 - 95 Gew.-Tl., bezogen auf Gewichtssumme A + B, Polydiorganosiloxan-Polycarbonat-Blockcopolymer, mit mittlerem Molekulargewicht $\overline{M}_w$ von 10.000 bis 200.000 und mit einem Gehalt an aromatischen Carbonatstruktureinheiten zwischen etwa 75 Gew.-% und 99 Gew.-% und einem Gehalt an Diorganosiloxy-Einheiten zwischen 1 Gew.-% und 25 Gew.-%, wobei die Blockcopolymeren solche auf Basis der Diphenole der Formel (I)

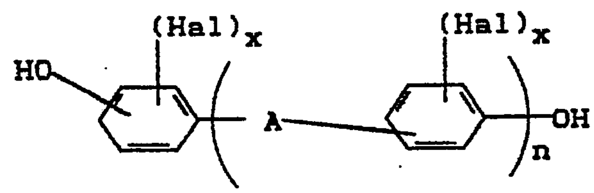
(I),

worin "A" eine Einfachbindung, ein $C_1$–$C_5$-Alkylen, ein $C_2$–$C_5$-Alkyliden, ein $C_5$–$C_6$-Cycloalkyliden, –S– oder –$SO_2$–, "Hal", Chlor oder Brom, "x" 0, 1 oder 2 und "n" 1 oder null sind, und der Formel (Ia) sind

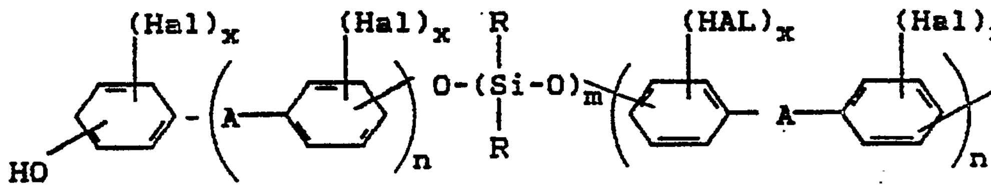
(Ia)

worin "A", "Hal", "x" und "n" die für Formel (I) genannte Bedeutung haben, und die R's gleich oder verschieden sind und ein lineares $C_1$–$C_{20}$-Alkyl, verzweigtes $C_3$–$C_{20}$-Alkyl oder $C_6$–$C_{20}$-Aryl sind und "m" eine ganze Zahl zwischen 5 und 100 ist, und wobei die Blockcopolymeren, ausgehend von den α,ω-Bishydroxyaryloxyendgruppenhaltigen Polydiorganosiloxanen (Ia), mit einem Polymerisationsgrad $P_n$ von 5 bis 100 hergestellt werden, und
B. 5 - 60 Gew.-Tl., bezogen auf Gewichtssumme A + B, eines statistisch aufgebauten Copolymerisats aus 95 - 70 Gew.-% Styrol, α-Methylstyrol oder kernsubstituierten Styrolen oder Mischungen der genannten Vinylaromaten und 5 - 30 Gew.% Maleinsäureanhydrid.

2. Formmassen gemäß Anspruch 1, in denen die Komponente A eine Mischung von Polydiorganosiloxan-Polycarbonat-Blockcopolymeren mit siloxanfreien thermoplastischen Polycarbonaten ist, wobei der Gesamtgehalt an Diorganosiloxy-Einheiten in dieser Polycarbonatmischung wiederum zwischen 1 Gew.-% und 25 Gew.-% liegt.

3. Formmassen gemäß Ansprüchen 1 und 2, in denen die Komponente B. aus 90 - 75 Gew.-% Styrol, α-Methylstyrol oder kernsubstituiertem Styrol oder Mischungen dieser Vinylaromaten und 10 - 25 Gew.-% Maleinsäureanhydrid aufgebaut ist.

4. Formmassen gemäß Ansprüchen 1 bis 3, bestehend zusätzlich aus mindestens einem Zusatzstoff, ausgewählt aus der Gruppe der Stabilisatoren, Pigmente, Fließmittel, Flammschutzmittel, Entformungsmittel und Antistatika bestehen.

5. Verfahren zur Herstellung der Formmassen gemäß Ansprüchen 1 bis 3, dadurch gekennzeichnet, daß man die Komponenten A und B in bekannter Weise vermischt und danach bei Temperaturen von 220°C bis 330°C in gebräuchlichen Aggregaten schmelzcompoundiert oder schmelzextrudiert.

6. Verfahren zur Herstellung der Formmassen gemäß Ansprüchen 1 bis 3, dadurch gekennzeichnet, daß man Lösungen der Komponenten A und B in geeigneten organischen Lösungsmitteln mischt und danach die Lösungsgemische in gebräuchlichen Eindampfaggregaten eindampft.

7. Verfahren zur Herstellung der Formmassen des Anspruchs 4 gemäß den Ansprüchen 5 und 6, dadurch gekennzeichnet, daß man mindestens einen Zusatz, ausgewählt aus der Gruppe der Stabilisatoren, Pigmente, Fließmittel, Flammschutzmittel, Entformungsmittel und Antistatika, einbezieht.

**Claims**

1. Thermoplastic moulding compounds consisting of
A. 40 to 95 parts by weight, based on the total weight of A + B, of a polydiorganosiloxane-polycarbonate block copolymer having an average molecular weight $M_w$ of 10,000 to 200,000 and having a content of aromatic carbonate structural units of about 75% by weight to 99% by weight and a content of diorganosiloxy units of 1% by weight to 25% by weight, the block copolymers being those based on diphenols corresponding to formula (I)

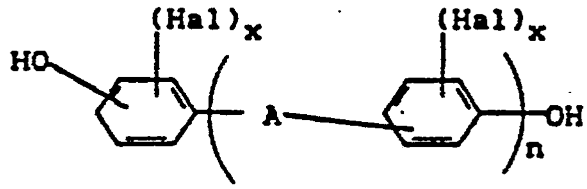 (I),

in which "A" in a single bond, a $C_{1-5}$ alkylene, a $C_{2-5}$ alkylidene, a $C_{5-6}$ cycloalkylidene, –S– or $-SO_2-$, "Hal" is chlorine or bromine, "x" is 0,1 or 2 and "n" is 1 or 0, and to formula (Ia)

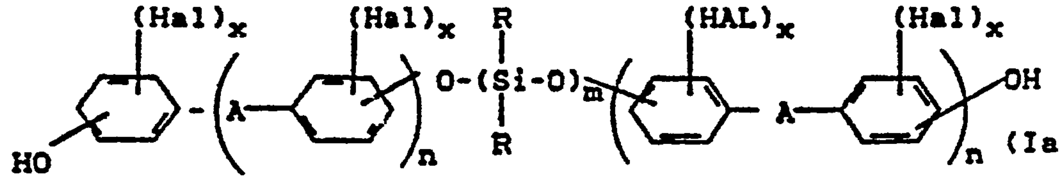 (Ia)

in which "A", "Hal", "x" and "n" are as defined for formula (I) and the R's may be the same or different and represent a linear $C_{1-20}$ alkyl, branched $C_{3-20}$ alkyl or $C_{5-20}$ aryl and "m" is an integer of 5 to 100, the block copolymers being produced from the α,ω-bishydroxyaryloxy-terminated polydiorganosiloxanes (Ia) having a degree of polymerization $P_n$ of 5 to 100, and

B. 5 to 60 parts by weight, based on the total weight of A + B, of a statistical copolymer of 95 to 70% by weight styrene, α-methyl styrene or nucleus-substituted styrenes or mixtures of the aromatic vinyl compounds mentioned and 5 to 30% by weight maleic anhydride.

2. Moulding compounds as claimed in claim 1, in which component A is a mixture of polydiorganosiloxane-polycarbonate block copolymers with siloxane-free thermoplastic polycarbonates, the total content of diorganosiloxy units in this polycarbonate mixture again being from 1% by weight to 25% by weight.

3. Moulding compounds as claimed in claims 1 and 2, in which component B. is synthesized from 90 to 75% by weight styrene, α-methyl styrene or nucleus-substituted styrene or mixtures of these aromatic vinyl compounds and 10 to 25% by weight maleic anhydride.

4. Moulding compounds as claimed in claims 1 to 3 additionally consisting of at least one additive selected from the group consisting of stabilizers, pigments, flow aids, flameproofing agents, mouls release agents and antistatic agents.

5. A process for the production of the moulding compounds claimed in claims 1 to 3, characterized in that components A and B are mixed in known manner and the resulting mixture is melt-compounded or melt-extruded in standard units at temperatures of 220°C to 330°C.

6. A process for the production of the moulding compounds claimed in claims 1 to 3, characterized in that solutions of components A and B in suitable organic solvents are mixed and the resulting solution mixtures are subsequently concentrated by evaporation in standard evaporation units.

7. A process for the production of the moulding compounds claimed in claims 5 and 6, characterized in that at least one additive from the group consisting of stabilizers, pigments, flow aids, flameproofing agents, mould release agents and antistatic agents is incorporated.

**Revendications**

1. Matières à mouler thermoplastiques consistant en

A. 40 à 95 parties en poids, par rapport à la somme des poids de A + B, d'un copolymère séquencé polydiorganosiloxanne-polycarbonate, à un poids moléculaire moyen $\overline{M}_w$ de 10 000 à 200 000, à une teneur en motifs de structure de carbonates aromatiques d'environ 75% en poids à 99% en poids et à une teneur en motifs diorganosiloxy de 1% en poids à 25% en poids, les copolymères séquencés étant à base de diphénols de formule I

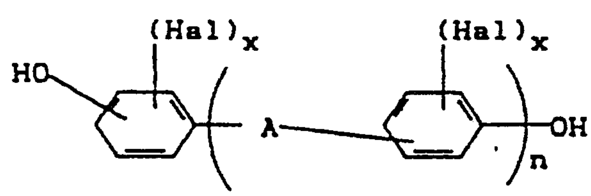 (I),

dans laquelle A représente une liaison simple, un groupe alkylène en $C_1$–$C_5$, un troupe alkylidène en

$C_2$–$C_5$, un groupe cycloalkylidène en $C_5$–$C_6$, –S– ou –$SO_2$–, Hal représente le chlore ou le brome, x est égal à 0, 1 ou 2 et n est égal à 1 ou 0,
et de la formule Ia

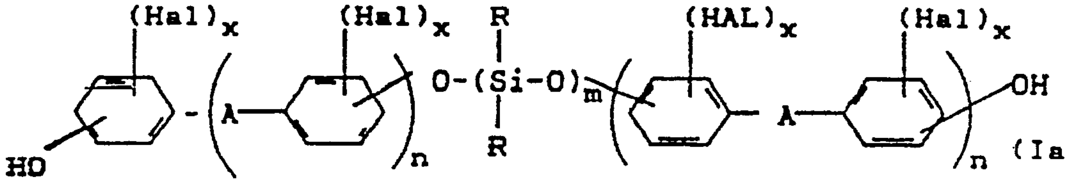
(Ia)

dans laquelle A, Hal, x et n ont les significations indiquées en référence à la formule I et les symboles R, ayant des significations identiques ou différentes, représentent chacun un groupe alkyle linéaire en $C_1$–$C_{20}$, un groupe alkyle ramifié en $C_3$–$C_{20}$ ou un groupe aryle en $C_6$–$C_{20}$ et m est un nombre entier de 5 à 100, et

B. 5 à 60 parties en poids, par rapport à la somme des poids de A + B, d'un copolymère à structure statistique de 95 à 70% en poids de styrène, d'alpha-méthylstyrène ou de styrènes substitués dans le noyau ou de mélanges de ces monomères vinylaromatiques et de 5 à 30% en poids d'anhydride maléique.

2. Matières à mouler selon la revendication 1, dans lesquelles le composant A est un mélange de copolymères séquencés polydiorganosiloxanne-polycarbonates avec des polycarbonates thermoplastiques exempts de siloxanne, la teneur totale en motifs diorganosiloxy de ce mélange à base de polycarbonates étant ici encore de 1 à 25% en poids.

3. Matières à mouler selon les revendications 1 et 2, dans lesquelles le composant B est constitué de 90 à 75% en poids de styrène, d'alpha-méthylstyrène ou d'un styrène substitué dans le noyau ou de mélanges de ces monomères vinylaromatiques et de 10 à 25% en poids d'anhydride maléique.

4. Matières à mouler selon les revendications 1 à 3, consistant en outre en au moins un additif choisi dans le groupe des stabilisants, des pigments, des agents fluidifiants, des agents ignifugeants, des agents de démoulage et des agents antistatiques.

5. Procédé de préparation des matières à mouler selon les revendications 1 à 3, caractérisé en ce que l'on mélange de manière connue les composants A et B puis on les soumet à mélange à l'état fondu ou extrusion à l'état fondu à des températures de 220 à 330°C dans des appareils usuels.

6. Procédé de préparation des matières à mouler selon les revendications 1 à 3, caractérisé en ce que l'on mélange des solutions des composants A et B dans des solvants appropriés puis on évapore le mélange des solutions dans des appareils d'évaporation usuels.

7. Procédé de préparation des matières à mouler de la revendication 4, selon les revendications 5 et 6, caractérisé en ce que l'on introduit au moins un additif choisi dans le groupe des stabilisants, des pigments, des agents fluidifiants, des agents ignifigeants, des agents de démoulage et des agents antistatiques.